# EUROPEAN PATENT APPLICATION

(11) **EP 4 322 267 A1**
(43) Date of publication of application: **14.02.2024**
(21) Application number: 22825222.7
(22) Date of filing: 09.06.2022
(51) Int. Cl.: H01M 8/04119, B01D 63/02

(54) **FUEL CELL MEMBRANE HUMIDIFIER**

(30) Priority: 17.06.2021 KR 20210078939
(71) Applicant: Kolon Industries, Inc., Seoul 07793 (KR)
(72) Inventor: KIM, Do Woo, Seoul 07793 (KR); AHN, Na Hyun, Seoul 07793 (KR); KIM, In Ho, Seoul 07793 (KR)
(74) Representative: Ter Meer Steinmeister & Partner
(86) International application number: PCT/KR2022/008162
(87) International publication number: WO 2022/265297

(57) **Abstract**

Disclosed is a fuel cell membrane humidifier that can prevent gas leakage due to repeated operation and stop of a fuel cell, can be manufactured with relatively low manufacturing cost and high productivity, and can suppress vibrations generated during operation.

The disclosed fuel cell membrane humidifier comprises a humidification module for humidifying air supplied from the outside with moisture in off-gas discharged from a fuel cell stack. The humidification module comprises a mid-case having both open ends, a step being formed on the inner circumferential surface of the mid-case, at least one cartridge disposed in the mid-case and accommodating multiple hollow fiber membranes, a fixing layer in which the ends of the hollow fiber membranes are potted and which is supported by a mid-case inner wall, a bracket supported by the step of the mid-case and in contact with the fixing layer, and a packing member having a groove in which the end of the mid-case is fitted, the packing member being contact with the bracket.

## Description

### Technical Field

The present disclosure relates to a fuel cell membrane humidifier, and more specifically, to a fuel cell membrane humidifier that can prevent gas leakage due to repeated operation and stop of a fuel cell, can be manufactured with relatively low manufacturing cost and high productivity, and can suppress vibrations generated during operation.

### Background Art

A fuel cell is a power-generating battery that produces electricity by combining hydrogen with oxygen. Unlike general chemical cells such as batteries or storage batteries, fuel cells can continuously produce electricity as long as hydrogen and oxygen are supplied thereto, and are about twice as efficient as internal combustion engines because of no heat loss.

In addition, pollutant emissions are low because the chemical energy generated by the combination of hydrogen with oxygen is directly converted into electrical energy. Therefore, fuel cells are not only environmentally friendly, but also have the advantage of reducing concerns about resource depletion due to increased energy consumption.

Fuel cells may be broadly classified into polymer electrolyte membrane fuel cells (PEMFC), phosphoric acid fuel cells (PAFC), molten carbonate fuel cells (MCFC), solid oxide fuel cells (SOFC), and alkaline fuel cells (AFC), depending on the type of electrolyte used.

Each of these fuel cells operates fundamentally on the same principle, but is different in the type of fuel used, operating temperature, catalyst, electrolyte, and the like. Among these, the PEMFC is known to be the most promising not only for small stationary power generation equipment but also for transportation systems because the PEMFC can operate at lower temperatures than other fuel cells and can be miniaturized due to its high-power density.

One of the most important factors in improving the performance of the PEMFC is to maintain the moisture content by supplying a certain amount of moisture to polymer electrolyte membranes or proton exchange membranes (PEM) of the membrane electrode assembly. This is because when the polymer electrolyte membranes become dry, power generation efficiency rapidly decreases.

Methods for humidifying the polymer electrolyte membranes include 1) a bubbler humidification method to supply moisture by filling a pressure vessel with water and passing target gas through a diffuser, 2) a direct injection method to supply moisture directly to a gas flow pipe through a solenoid valve after calculating the amount of moisture needed for the fuel cell reaction, and 3) a membrane humidification method to supply moisture to the fluidized layer of gas using a polymer separation membrane.

Among these, the membrane humidification method whereby the polymer electrolyte membranes are humidified by providing water vapor to air supplied to the polymer electrolyte membranes by using membranes that selectively transmit only the water vapor contained in off-gas is advantageous in that it can lighten and miniaturize the membrane humidifier.

When forming a module, the selective permeable membranes used in the membrane humidification method are preferably hollow fiber membranes with a large permeable area per unit volume. That is, when manufacturing a membrane humidifier using hollow fiber membranes, high integration of the hollow fiber membranes with a wide contact surface area is possible, enabling sufficient humidification of a fuel cell even with a small capacity, low-cost materials may be used, and moisture and heat contained in off-gas discharged at high temperature from the fuel cell may be recovered and reused through the membrane humidifier.

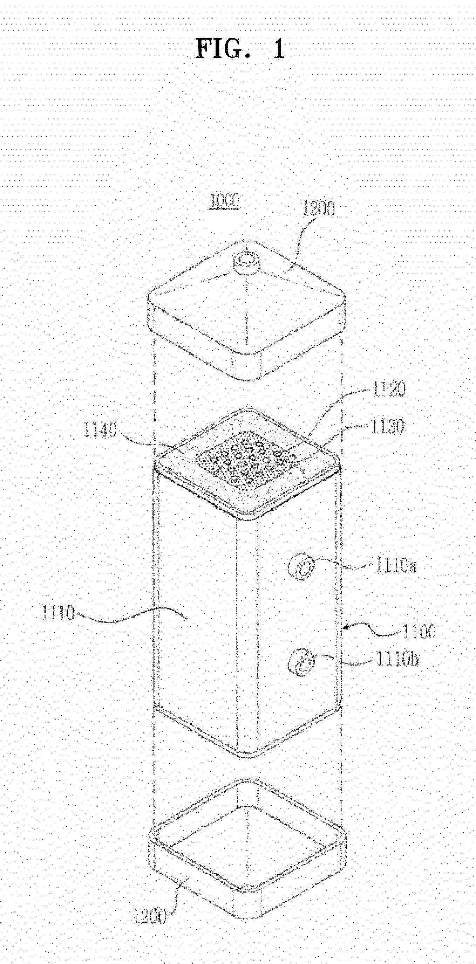

As shown in FIG. 1, a humidifier 1000 of a typical membrane humidification type includes a humidification module 1100 for humidifying air supplied from the outside with moisture in off-gas discharged from a fuel cell stack (not shown), and caps 1200 coupled to both ends of the humidification module 1100, respectively.

One of the caps 1200 delivers air supplied from the outside to the humidification module 1100, and the other delivers air humidified by the humidification module 1100 to the fuel cell stack.

The humidification module 1100 includes a mid-case 1110 having an off-gas inlet 1110a and an off-gas outlet 111 0b, and a plurality of hollow fiber membranes 1120 within the mid-case 1110. Both ends of the bundle of hollow fiber membranes 1120 are potted in a fixing layer 1130. The fixing layer 1130 is generally formed by curing a liquid polymer such as liquid polyurethane resin through a casting method (e.g., dip casting or centrifugal casting).

The air supplied from the outside flows along cavities of the hollow fiber membranes 1120. The off-gas flowing into the mid-case 1110 through the off-gas inlet 1110a contacts the outer surfaces of the hollow fiber membranes 1120 and is then discharged from the mid-case 1110 through the off-gas outlet 1110b. When the off-gas contacts the outer surfaces of the hollow fiber membranes 1120, the moisture contained in the off-gas passes through the hollow fiber membranes 1120 to humidify the air flowing along the cavities of the hollow fiber membranes 1120.

The inner spaces of the caps 1200 should be in fluid communication only with the cavities of the hollow fiber membranes 1120 and should be completely blocked from the inner space of the mid-case 1110. Otherwise, gas leakage occurs due to pressure difference, reducing the power generation efficiency of the fuel cell.

Generally, as shown in FIG. 1, together with the fixing layer 1130, a resin layer 1140 between the fixing layer 1130 and the mid-case 1110 blocks the inner spaces of the caps 1200 from the inner space of the mid-case 1110. Similar to the fixing layer 1130, the resin layer 1140 is generally formed by curing a liquid polymer such as liquid polyurethane resin through a casting method (dip casting or centrifugal casting).

However, (i) as expansion and contraction of the resin layer 1140 occur alternately due to repeated operation and stop of a fuel cell, the resin layer 1140 is separated from the mid-case 1110 due to the difference in thermal expansion coefficient between the mid-case 1110 and the resin layer 1140, thereby causing a gap therebetween, or (ii) a gap between the resin layer 1140 and the mid-case 1110 may be caused due to vibration and/or impact. The gap between the resin layer 1140 and the mid-case 1110 causes gas leakage and reduces the power generation efficiency of the fuel cell.

To prevent gas leakage due to the gap between the resin layer 1140 and the mid-case 1110, Republic of Korea Patent No. 1697998 discloses a method of applying a sealant (liquid sealant) to a groove formed by a step on the side surface of the resin layer 1140 and an inner surface of the mid-case 1110, then fitting a packing member (solid sealant) into the groove, and curing the sealant.

However, this method has problems of low productivity and high manufacturing cost in that: (i) workability is not good because the sealant should be applied exactly to the groove, (ii) it takes a very long time, more than 24 hours, to cure the sealant, and (iii) a separate space is required to store the humidification module 1100 until the sealant hardens.

### Disclosure

### Technical Problem

The purpose of the present disclosure is to provide a fuel cell membrane humidifier that can prevent problems caused by the limitations and shortcomings of the above-mentioned related technologies, that not only can reliably prevent gas leakage due to repeated operation and stop of the fuel cell, but can also be manufactured with relatively low manufacturing costs and high productivity, and that can suppress vibrations generated during operation.

### Technical Solution

A fuel cell membrane humidifier according to an embodiment of the present disclosure includes
a humidification module configured to humidify air supplied from the outside with moisture in off-gas discharged from a fuel cell stack, and caps coupled to both ends of the humidification module, respectively. The humidification module includes a mid-case with both ends open and a step formed on an inner circumferential surface of the mid-case, at least one cartridge positioned within the mid-case and accommodating a plurality of hollow fiber membranes, a fixing layer in which ends of the hollow fiber membranes are potted, the fixing layer being supported by an inner wall of the mid-case, a bracket supported by the step of the mid-case and in contact with the fixing layer, and a packing member having a groove into which an end of the mid-case is fitted, the packing member being in contact with the bracket.

In the fuel cell membrane humidifier according to an embodiment of the present disclosure, the bracket and the packing member may each have a single closed curve shape corresponding to the transverse section of the mid-case.

In the fuel cell membrane humidifier according to an embodiment of the present disclosure, the bracket has a higher hardness than the packing member.

In the fuel cell membrane humidifier according to an embodiment of the present disclosure, the bracket may have a hardness of 60 to 100 Shore A, and the packing member may have a hardness of 40 to 50 Shore A.

In the fuel cell membrane humidifier according to an embodiment of the present disclosure, the packing member may include soft rubber, and the bracket may include metal, hard plastic, or hard rubber.

In the fuel cell membrane humidifier according to an embodiment of the present disclosure, the packing member may include silicone rubber or urethane rubber, and the bracket may include polypropylene (PP), polyethylene terephthalate (PET), polystyrene (PS), polycarbonate (PC), or acrylic resin.

In the fuel cell membrane humidifier according to an embodiment of the present disclosure, the packing member may be in contact with the fixing member.

In the fuel cell membrane humidifier according to an embodiment of the present disclosure, the fixing member may include a first fixing layer in which ends of the hollow fiber membranes are potted, and a second fixing layer surrounding the first fixing layer and contacting the bracket.

In the fuel cell membrane humidifier according to an embodiment of the present disclosure, the first fixing layer and the second fixing layer may be formed of the same material.

In the fuel cell membrane humidifier according to an embodiment of the present disclosure, both the first fixing layer and the second fixing layer may include polyurethane (PU) resin.

In the fuel cell membrane humidifier according to an embodiment of the present disclosure, the humidification module may further include an inner case with both ends open within the mid-case, and the hollow fiber membranes may be positioned within the inner case.

In the fuel cell membrane humidifier according to an embodiment of the present disclosure, the end of the inner case may be potted in the first fixing layer.

In the fuel cell membrane humidifier according to an embodiment of the present disclosure, a protruding member may be formed on the inner wall of the packing member, the protruding member fitted into the fixing layer and suppressing vibrations generated in the cartridge by air flowing inside the humidification module.

In addition, a fuel cell membrane humidifier according to an embodiment of the present disclosure includes
a humidification module configured to humidify air supplied from the outside with moisture in off-gas discharged from a fuel cell stack, and caps coupled to both ends of the humidification module, respectively, wherein the humidification module includes a mid-case with both ends open and a step formed on the inner circumferential surface of the mid-case, at least one cartridge positioned within the mid-case and accommodating a plurality of hollow fiber membranes, a fixing layer in which ends of the hollow fiber membranes are potted and which is supported by an inner wall of the mid-case, a bracket supported by the step of the mid-case and in contact with the fixing layer, and a packing member having a groove into which an end of the mid-case is fitted, the packing member being in contact with the bracket. The hollow fiber membranes include a first group of hollow fiber membranes and a second group of hollow fiber membranes. The humidification module includes a first inner case in which the first group of hollow fiber membranes are arranged, and a second inner case in which the second group of hollow fiber membranes are arranged, wherein the fixing layer includes a first fixing layer in which ends of the first group of hollow fiber membranes are potted, a second fixing layer in which ends of the second group of hollow fiber membranes are potted, and a third fixing layer surrounding the first and second fixing layers and contacting the bracket.

In the fuel cell membrane humidifier according to an embodiment of the present disclosure, a protruding member may be formed on the inner wall of the packing member, the protruding member fitted into the fixing layer and suppressing vibrations generated in the cartridge by air flowing inside the humidification module.

In the fuel cell membrane humidifier according to an embodiment of the present disclosure, an end of the first inner case may be potted in the first fixing layer, and an end of the second inner case may be potted in the second fixing layer.

### Advantageous Effects

According to the present disclosure, the sealant application process and sealant curing process required in the prior art are omitted, so not only is workability improved, but the manufacturing time is shortened, thereby dramatically improving productivity.

In addition, humidifier production costs may be reduced because no separate space is required to store semi-finished products for the sealant curing process.

Furthermore, the present disclosure not only can prevent gas leakage due to repeated operation and stop of a fuel cell, but also can be manufactured with relatively low manufacturing cost and high productivity.

Lastly, a protruding member formed on the inner wall (or inner surface) of the packing member may suppress vibrations generated during operation, may prevent the air inside the mid-case from flowing into the caps, thereby strengthening the sealing function, and may facilitate selection of the position of the fixing layer when forming the fixing layer.

### Description of Drawings

FIG. 1 is an exploded perspective view of a fuel cell membrane humidifier according to the prior art.
FIG. 2 is a cross-sectional view of a fuel cell membrane humidifier according to a first embodiment of the present disclosure.
FIG. 3A is a perspective view of a bracket according to the first embodiment of the present disclosure.
FIG. 3B is a cross-sectional view taken along line A-A in FIG. 3A.
FIG. 4A is a perspective view of a packing member according to the first embodiment of the present disclosure.
FIG. 4B is a cross-sectional view taken along line A-A in FIG. 4A.
FIG. 5 is a cross-sectional view of a fuel cell membrane humidifier according to a second embodiment of the present disclosure.
FIGS. 6A to 6G are cross-sectional views for illustrating a method of manufacturing a fuel cell membrane humidifier, according to an embodiment of the present disclosure.

### Best Mode

### Mode for Invention

Since the present disclosure can be subjected to various modifications and have various embodiments, specific embodiments are illustrated and described in detail in the description. However, this is not intended to limit the present disclosure to specific embodiments, and should be understood to include all transformations, equivalents, and substitutes included in the spirit and technical scope of the present disclosure.

The terms used in the present disclosure are only used to describe specific embodiments and are not intended to limit the present disclosure. Singular expressions include plural expressions unless clearly indicated otherwise in context. In the present disclosure, terms such as "include" or "have" are intended to designate the presence of features, numbers, steps, operations, components, parts, or combinations thereof described in the specification, but are not intended to preclude the possibility of presence or addition of one or more other features, numbers, steps, operations, components, parts, or combinations thereof. Hereinafter, a fuel cell membrane humidifier according to an embodiment of the present disclosure will be described with reference to the drawings.

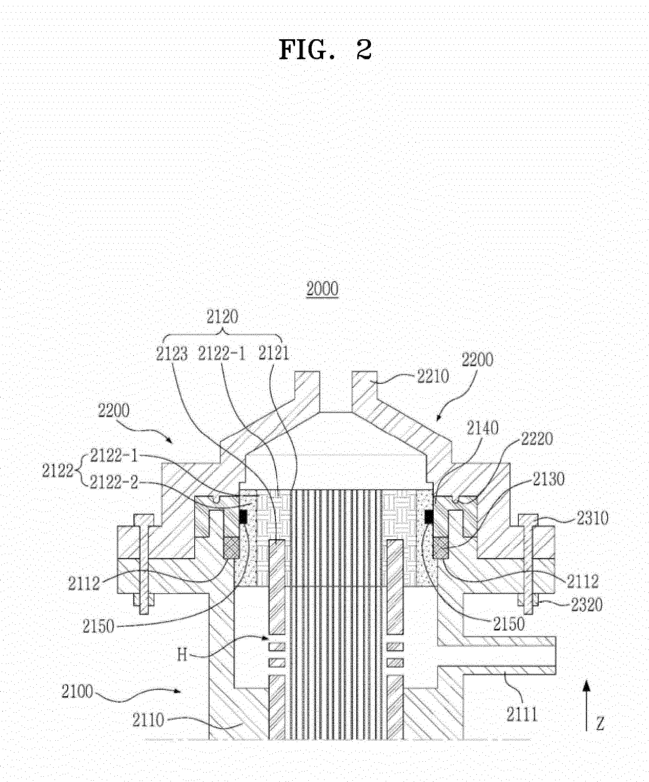

The cross-sectional views of FIGS. 2 and 5 to 6G are cross-sectional views of one end of a humidifier or a semi-finished product, where the other end thereof also has substantially the same (or symmetrical) cross-section as the one end thereof.

As shown in FIG. 2, a fuel cell membrane humidifier 2000 of the present disclosure includes a humidification module 2100 for humidifying air supplied from the outside with moisture in off-gas discharged from a fuel cell stack. Both ends of the humidification module 2100 are fastened to caps 2200, respectively.

One of the caps 2200 receives air from the outside through a port 2210 and delivers the air to the humidification module 2100, and the other delivers the air humidified by the humidification module 2100 to the fuel cell stack through the port 2210. The caps 2200 may include hard plastic (e.g., polycarbonate, polyamide (PA), polyphthalamide (PPA), etc.) or metal, and may have a simple closed curve-shaped (circular or polygonal) transverse section.

Depending on the design, one of the caps 2200 may supply off-gas to the humidification module 2100 to flow inside the hollow fiber membranes, and the other may discharge the moisture-exchanged off-gas to the outside. In addition, in this case, the outside air may flow in through one of ports 2111 for inflow/outflow of the off-gas, which will be described later, and the air humidified by the humidification module 2100 may be supplied to the fuel cell stack through the other of the ports 2111. The flow direction of the outside air and the flow direction of the off-gas may be the same or the opposite.

The humidification module 2100 according to an embodiment of the present disclosure is a device for humidifying air supplied from the outside with moisture in off-gas supplied from the fuel cell stack, the humidification module 2100 including a mid-case 2110 with both ends open and a step 2112 on the inner peripheral surface of the mid-case 2110, a plurality of hollow fiber membranes 2121 in the mid-case 2110, a fixing layer 2122 in which ends of the hollow fiber membranes 2121 are potted, a bracket 2130 supported by the step 2112 of the mid-case 2110 and in contact with the fixing layer 2122, a packing member 2140 that has a groove into which the end of the mid-case 2110 is fitted and is in contact with the bracket 2130, and a protruding member 2150 protruding from the inner wall of the packing member 2140.

The mid-case 2110 has the ports 2111 for inflow/outflow of off-gas (only one port is shown in FIG. 2). The mid-case 2110 may include hard plastic (e.g., PA, PPA, etc.) or metal, and may have a simple closed curve-shaped (circular or polygonal) transverse section. According to an embodiment of the present disclosure, the mid-case 2110 may have a cross-section of the same shape as the caps 2200.

The hollow fiber membranes 2121 may include polysulfone resin, polyethersulfone resin, sulfonated polysulfone resin, polyvinylidene fluoride (PVDF) resin, polyacrylonitrile (PAN) resin, polyimide resin, polyamide-imide resin, polyesterimide resin, or a mixture of two or more thereof. The air supplied from the outside through one cap 2200 is humidified as it flows along the cavities of the hollow fiber membranes 2121 and is then delivered to the fuel cell stack through the other cap 2200.

The off-gas flowing into the mid-case 2110 contacts the outer surfaces of the hollow fiber membranes 2121 and is then discharged from the mid-case 2110. When the off-gas contacts the outer surfaces of the hollow fiber membranes 2121, the moisture contained therein passes through the hollow fiber membranes 2121 and humidifies the air flowing along the cavities of the hollow fiber membranes 2121.

The fixing layer 2122, which may include hard or soft polyurethane resin, should block the inner spaces of the caps 2200 from the inner space of the mid-case 2110 so that the caps 2200 communicate only with the hollow fiber membranes 2121.

However, as described above, (i) as expansion and contraction of the fixing layer 2122 occur alternately due to repeated operation and stop of a fuel cell, the fixing layer 2122 is separated from the mid-case 2110 due to the difference in thermal expansion coefficient between the mid-case 2110 and the fixing layer 2122, thereby causing a gap therebetween, or (ii) a gap between the fixing layer 2122 and the mid-case 2110 may be caused due to vibration and/or impact. The gap between the fixing layer 2122 and the mid-case 2110 causes gas leakage and reduces the power generation efficiency of the fuel cell.

The gas leakage that may be caused by the gap between the fixing layer 2122 and the mid-case 2110 includes (i) an external leakage where the off-gas in the inner space of the mid-case 2110 sequentially passes through the gap between the fixing layer 2122 and the mid-case 2110 and the gap between the cap 2200 and the mid-case 2110 and exits the humidifier 2000, and (ii) an internal leakage where the off-gas in the inner space of the mid-case 2110 sequentially passes through the gap between the fixing layer 2122 and the mid-case 2110 and the gap between the fixing layer 2122 and the cap 2200 and enters the inner space of the cap 2200.

To prevent gas leakage due to the gap between the fixing layer 2122 and the mid-case 2110, the fuel cell membrane humidifier 2000 of the present disclosure further includes a bracket 2130, a packing member 2140, and a protruding member 2150.

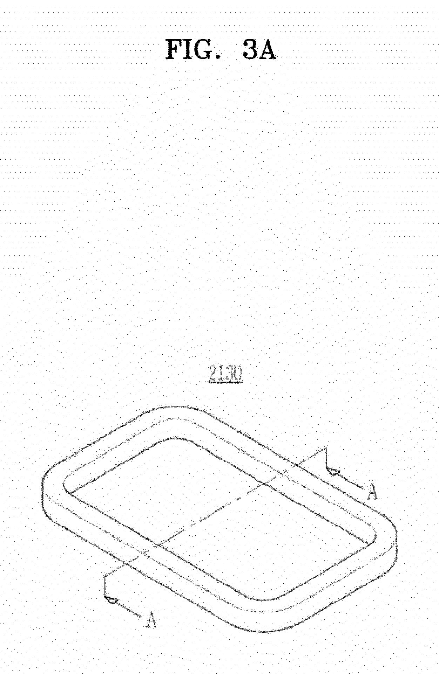

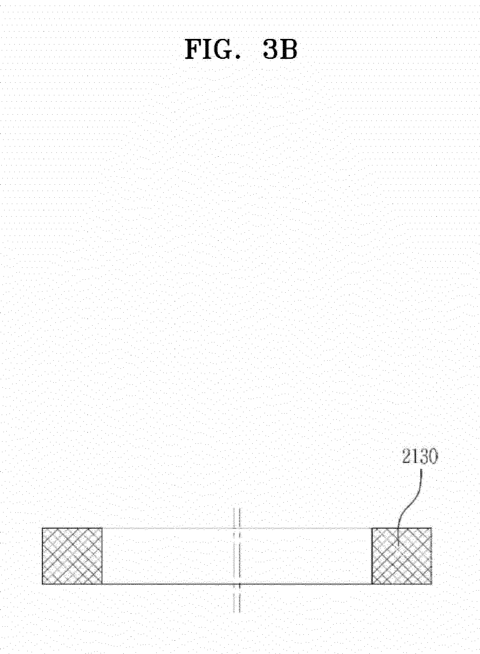

As shown in FIGS. 3A and 3B, the bracket 2130 supported by the step 2112 of the mid-case 2110 may have a single closed curve shape corresponding to the transverse section of the mid-case 2110.

According to an embodiment of the present disclosure, the bracket 2130 has a higher hardness than the packing member 2140 and is strongly adhered to the fixing layer 2122.

For example, the packing member 2140 may have a hardness of 30 to 60 Shore A to be compressed by the pressure applied when the cap 2200 is fastened to the mid-case 2110 with a bolt 2310 and a nut 2320, and more preferably, have a relatively low hardness of 40 to 50 Shore A, and the bracket 2130 may have a hardness of 60 to 100 Shore A, which is higher than the hardness of the packing member 2140, and more preferably, have a hardness of 70 to 100 Shore A.

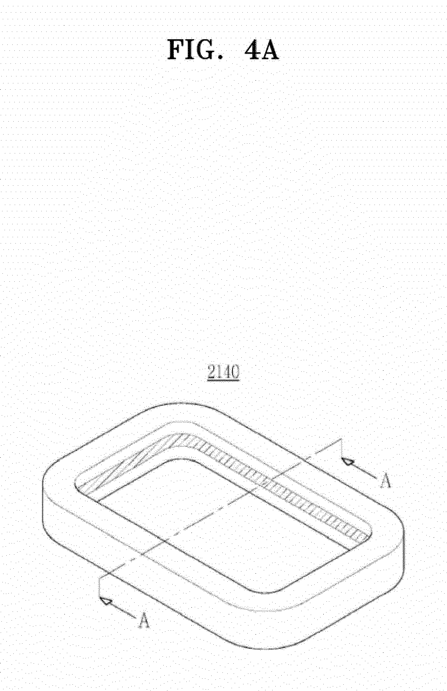

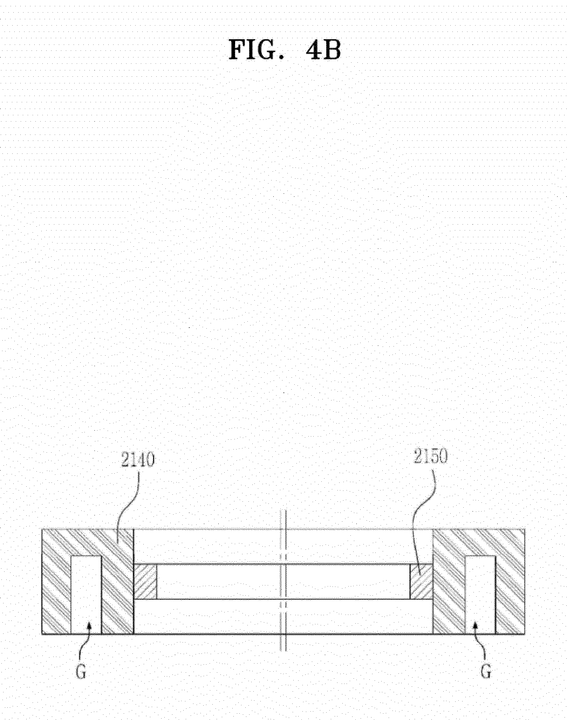

As shown in FIGS. 4A and 4B, the packing member 2140 having a groove G into which the end of the mid-case 2110 is fitted may also have a single closed curve shape corresponding to the transverse section of the mid-case 2110.

According to an embodiment of the present disclosure, the packing member 2140 may include soft rubber (e.g., silicone rubber or urethane rubber), and the bracket 2130 may include metal, hard plastic (e.g., polypropylene (PP), polyethylene terephthalate (PET), polystyrene (PS), polycarbonate (PC), or acrylic resin), or hard rubber.

When the cap 2200 is fastened to the mid-case 2110 with the bolt 2310 and the nut 2320, a portion of the packing member 2140 between the cap 2200 and the mid-case 2110 (particularly, a portion of the packing member 2140 corresponding to the groove into which the end of the mid-case 2110 is fitted) is compressed by the pressure applied by the cap 2200 and the mid-case 2110, thereby preventing movement of gas (i.e., external leakage) through the interface between the packing member 2140 and the mid-case 2110 to ensure tight external sealing.

In addition, because the bracket 2130 is not only supported by the step 2112 of the mid-case 2110 but also has relatively high hardness, the bracket 2130 may effectively apply pressure to the packing member 2140 together with the cap 2200 when the cap 2200 is fastened to the mid-case 2110 with the bolt 2310 and the nut 2320. As a result, excellent internal sealing may be ensured by preventing the movement of gas (i.e., internal leakage) through the interface between the packing member 2140 and the bracket 2130 as the packing member 2140 positioned between the cap 2200 and the bracket 2130 (i.e., inside the mid-case 2110) is sufficiently compressed.

In addition, the bracket 2130 according to an embodiment of the present disclosure has excellent adhesion to the fixing layer 2122, thereby preventing gas movement (i.e., internal leakage) through the interface between the bracket 2130 and the fixing layer 2122 to provide stronger internal sealing. If necessary, the adhesive strength between the bracket 2130 and the fixing layer 2122 may be further improved by treating the surface of the bracket 2130 with a primer, thereby maximizing the internal sealing effect.

The protruding member 2150 protrudes from the inner wall of the packing member 2140 toward the fixing layer 2122. The protruding member 2150 may be formed in an annular ring shape surrounding the inner wall of the packing member 2140. During manufacturing, the protruding member 2150 may be fitted into the fixing layer 2122 by pressure. The protruding member 2150 may be fitted into a second fixing layer 2122-2. The protruding member 2150 may also pass through the second fixing layer 2122-2 and may be fitted into a first fixing layer 2122-1.

As the protruding member 2150 is fitted into the fixing layer 2122 by pressure to compress the fixing layer 2122, the air inside the mid-case 2110 is suppressed from moving toward the cap 2200, thereby enabling tighter internal sealing.

In addition, as the protruding member 2150 is fitted into the fixing layer 2122 by pressure to compress the fixing layer 2122, vibrations generated in a cartridge 2120 may be suppressed by the air flowing inside the humidification module 2100. That is, the cartridge 2120 may be suppressed from vibrating in the Z-axis direction by the flow of dry air (indicated in the Z-axis direction in FIG. 2) flowing through the port 2210 of the cap 2200.

In addition, the protruding member 2150 protrudes from the inner wall of the mid-case 2110 in the direction of the fixing layer 2122, so that positioning of the fixing layer 2122 may be easily selected when forming the fixing layer 2122 during the manufacturing process.

As shown in FIG. 2, the cap 2200 according to an embodiment of the present disclosure may have a cap protrusion 2220 at a position corresponding to the end of the mid-case 2110 fitted into the groove of the packing member 2140. The cap protrusion 2220 enables tighter external sealing by more effectively compressing the packing member 2140 together with the end of the mid-case 2110.

The packing member 2140 according to an embodiment of the present disclosure may contact the fixing layer 2122, as shown in FIG. 2. The adhesive strength between the packing member 2140 and the fixing layer 2122 may be improved and the internal sealing may be strengthened by hardening the liquid resin (e.g., liquid polyurethane resin) used to form the fixing layer 2122 while in contact with the packing member 2140.

According to an embodiment of the present disclosure, as shown in FIG. 2, the fixing layer 2122 may include a first fixing layer 2122-1 in which the ends of the hollow fiber membranes 2121 are potted and a second fixing layer 2122-2 surrounding the first fixing layer 2122-1 and in contact with the bracket 2130.

The first fixing layer 2122-1 and the second fixing layer 2122-2 may each be formed by curing a liquid resin such as liquid polyurethane resin through a dip casting method or a centrifugal casting method. The first fixing layer 2122-1 and the second fixing layer 2122-2 may each be formed of different materials, but it is preferable that the first fixing layer 2122-1 and the second fixing layer 2122-2 are each formed of the same material (e.g., polyurethane resin) in terms of adhesive strength therebetween.

As shown in FIG. 2, the humidification module 2100 may further include an inner case 2123 with both ends open within the mid-case 2110. In this case, the hollow fiber membranes 2121 are positioned within the inner case 2123. The first fixing layer 2122-1 in which the ends of the hollow fiber membranes 2121 are potted closes the open ends of the inner case 2123.

According to an embodiment of the present disclosure, the inner case 2123 has a plurality of holes H at positions corresponding to the ports 2111 (only one is shown in FIG. 2) for inflow/outflow of off-gas. The off-gas flowing into the mid-case 2110 through a first port 2111 loses moisture while passing through first holes H and then flowing along the outer surfaces of the hollow fiber membranes 2121. Subsequently, the off-gas leaves the inner case 2133 through second holes H on the opposite side to the first holes H and is discharged from the mid-case 2110 through a second port 2111.

The hollow fiber membrane cartridge 2120 includes the hollow fiber membranes 2121, the first fixing layer 2122-1, and the inner case 2123.

As shown in FIG. 2, the end of the inner case 2123 is potted in the first fixing layer 2122-1, so that the relative positions of the hollow fiber membranes 2121 and the inner case 2123 may be maintained constant.

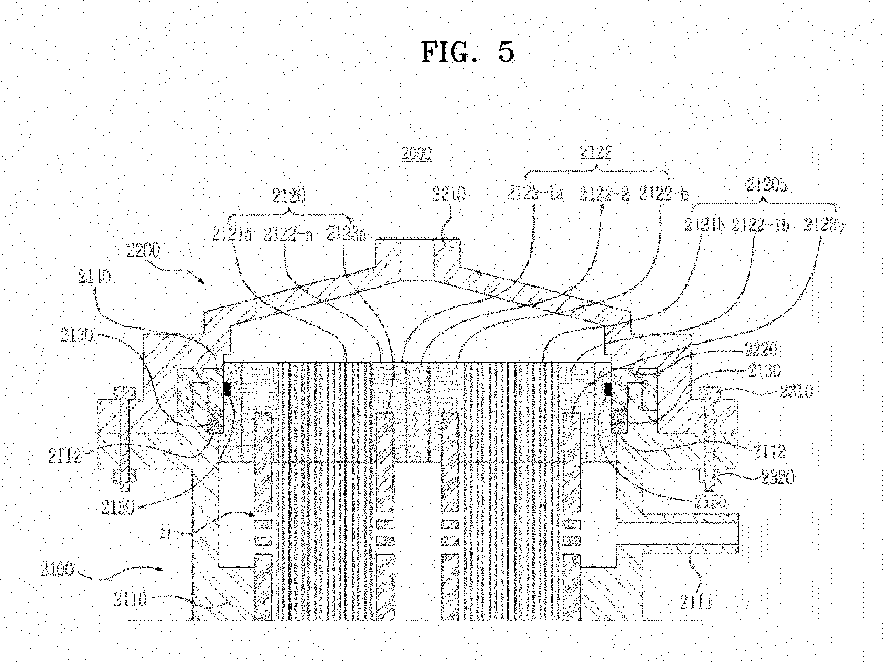

Hereinafter, a fuel cell membrane humidifier 2000 according to a second embodiment of the present disclosure will be described with reference to FIG. 5.

As shown in FIG. 5, the fuel cell membrane humidifier 2000 according to the second embodiment of the present disclosure is substantially the same as the first embodiment described above, except that the fuel cell membrane humidifier 2000 includes two hollow fiber membrane cartridges 2120a and 2120b.

That is, according to the second embodiment of the present disclosure, the hollow fiber membranes include a first group of hollow fiber membranes 2121a and a second group of hollow fiber membranes 2121b, the humidification module 2100 includes a first inner case 2123a in which the first group of hollow fiber membranes 2121a are disposed and a second inner case 2123b in which the second group of hollow fiber membranes 2121b are disposed, the fixing layer 2122 includes a first fixing layer 2122-1a in which the ends of the first group of hollow fiber membranes 2121a are potted, a second fixing layer 2122-1b in which the ends of the second group of hollow fiber membranes 2121b are potted, and a third fixing layer 2122-2 that surrounds the first and second fixing layers 2122-1a and 2122-1b and is in contact with the bracket 2130.

The first hollow fiber membrane cartridge 2120a includes the first group of hollow fiber membranes 2121a, the first fixing layer 2122-1a, and the first inner case 2123a, and the second hollow fiber membrane cartridge 2120b includes the second group of hollow fiber membranes 2121b, the second fixing layer 2122-1b, and the second inner case 2123b.

As shown in FIG. 5, the ends of the first and second inner cases 2123a and 2123b are potted into the first and second fixing layers 2122-1a and 2122-1b, respectively, so that the relative positions of the first group of hollow fiber membranes 2121a and the first inner case 2123a and the relative positions of the second group of hollow fiber membranes 2121b and the second inner case 2123b may be maintained constant.

For larger humidification capacity, the number of hollow fiber membranes 2121 should be increased. However, in the first embodiment including only one hollow fiber membrane cartridge 2120, the more hollow fiber membranes 2121 there are, the more difficult it is for off-gas to be delivered to the centrally located hollow fiber membranes 2121.

On the other hand, in the second embodiment of the present disclosure, since the two hollow fiber membrane cartridges 2120a and 2120b are arranged spaced apart from each other, off-gas may be relatively uniformly delivered to all hollow fiber membranes 2121a and 2121b although the number of hollow fiber membranes 2121a and 2121b increases. That is, when the number of hollow fiber membranes is the same, the structure of the second embodiment including two hollow fiber membrane cartridges 2120a and 2120b is advantageous in terms of usability of hollow fiber membranes, compared to the structure of the first embodiment including only one hollow fiber membrane cartridge 2120.

The number of hollow fiber membrane cartridge(s) mounted in the mid-case 2110 may be determined by taking into account the capacity of the fuel cell (or required humidification capacity), the size of the humidifier, and the weight of the humidifier.

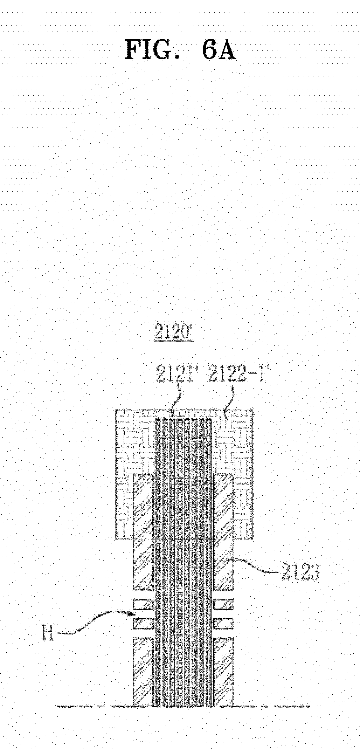

Hereinafter, the manufacturing method of the fuel cell membrane humidifier 2000 according to an embodiment of the present disclosure will be described in more detail with reference to FIGS. 6A to 6G.

First, as shown in FIG. 6A, a hollow fiber membrane cartridge 2120' in which the ends of a plurality of hollow fiber membranes 2121' are potted in a first fixing layer 2122-1' is prepared.

The hollow fiber membrane cartridge 2120' may be manufactured by inserting at least a portion of each of the hollow fiber membranes 2121' into the inner case 2123 and then performing a deep casting process or centrifugal casting process using a liquid resin such as liquid polyurethane resin. Through curing of the liquid resin, the first fixing layer 2122-1' in which the ends of the hollow fiber membranes 2121' are potted is formed. When performing a deep casting process or a centrifugal casting process, the end of the inner case 2123 may also be potted into the first fixing layer 2122-1' along with the ends of the hollow fiber membranes 2121'. The inner case 2123 may have first and second groups of holes H located on opposite sides along its longitudinal direction.

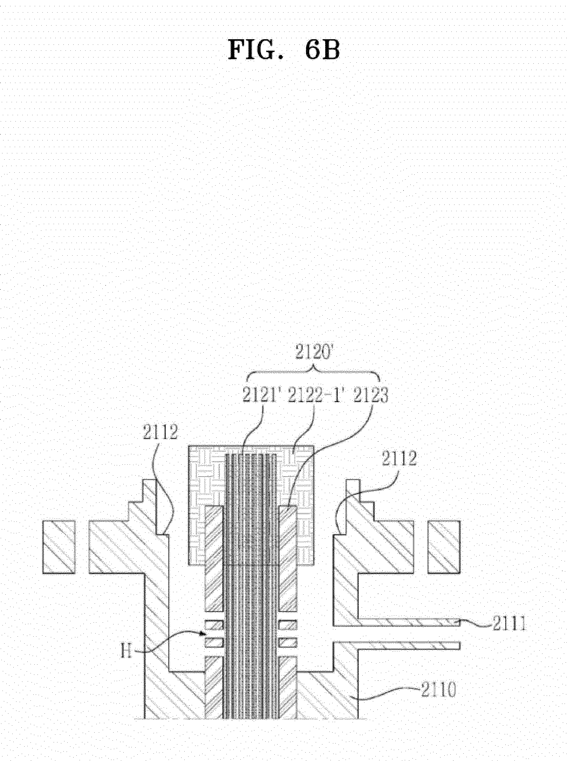

Subsequently, as shown in FIG. 6B, the hollow fiber membrane cartridge 2120' is inserted into the mid-case 2110 with both ends open and a step 2112 formed on the inner peripheral surface of the mid-case 2110.

According to an embodiment of the present disclosure, the mid-case 2110 has open ends and a simple closed curve-shaped transverse section. The mid-case 2110 may have a partition that divides the inner space into an off-gas inflow space and an off-gas outflow space located on opposite sides in the longitudinal direction, and may be supported by the partition by fitting the hollow fiber membrane cartridge 2120' into the hole formed in the partition. The first group of holes H of the inner case 2123 exist in the off-gas inflow space, and the second group of holes H of the inner case 2123 exist in the off-gas outflow space.

In this case, the off-gas entering the off-gas inflow space flows into the inner case 2123 through the first group of holes H, flows toward the second group of holes H within the inner case 2123, moves to the off-gas outflow space through the second group of holes H, and is then discharged from the mid-case 2110.

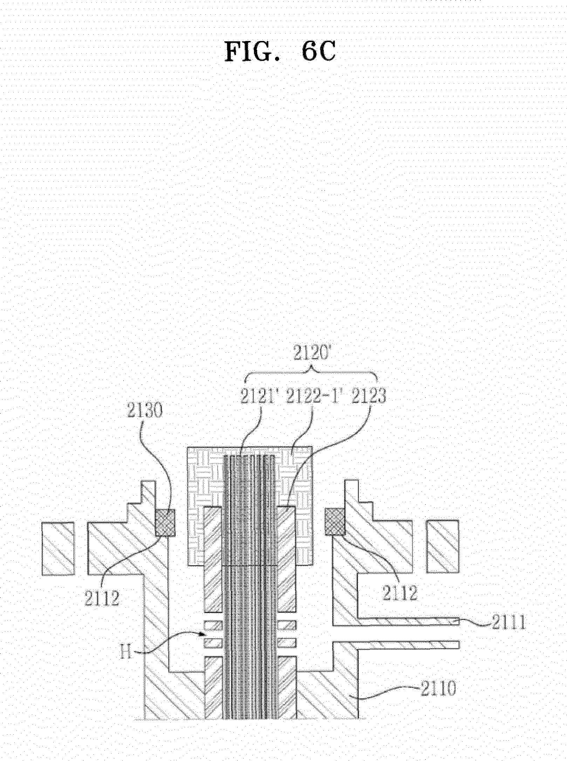

Subsequently, as shown in FIG. 6C, the bracket 2130 is mounted on the step 2112 of the mid-case 2110. As described above, the mid-case 2110 may have a single closed curve-shaped transverse section, and the bracket 2130 may have a single closed curve shape corresponding to the transverse section of the mid-case 2110.

The bracket 2130 according to an embodiment of the present disclosure may include metal, hard plastic (e.g., PP, PET, PS, PC, or acrylic resin), or hard rubber. Optionally, the surface of the bracket 2130 may be treated with a primer and then mounted on the step 2112 of the mid-case 2110.

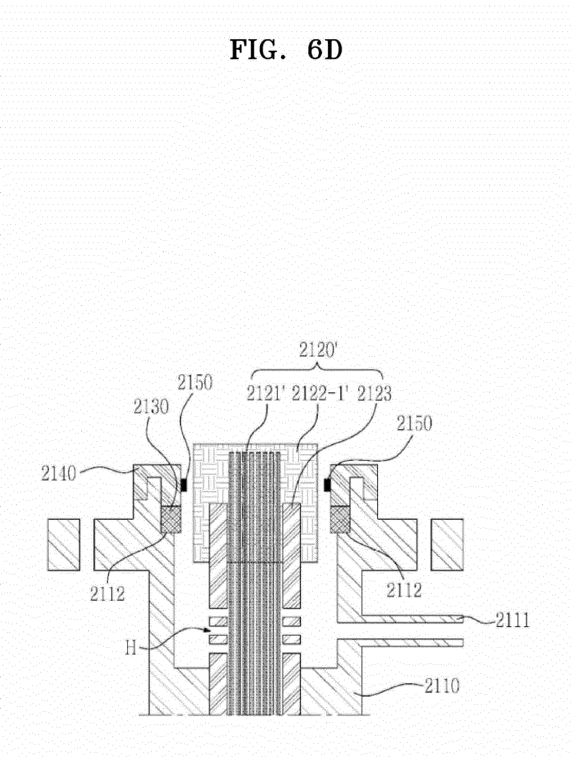

Subsequently, as shown in FIG. 6D, the packing member 2140 having a groove corresponding to the end of the mid-case 2110 is mounted on the end of the mid-case 2110 so that the end of the mid-case 2110 is fitted into the groove and a part of the packing member 2140 is in contact with the bracket 2130. The packing member 2140 may also have a single closed curve shape corresponding to the transverse section of the mid-case 2110. The protruding member 2150 is formed on the inner surface of the packing member 2140.

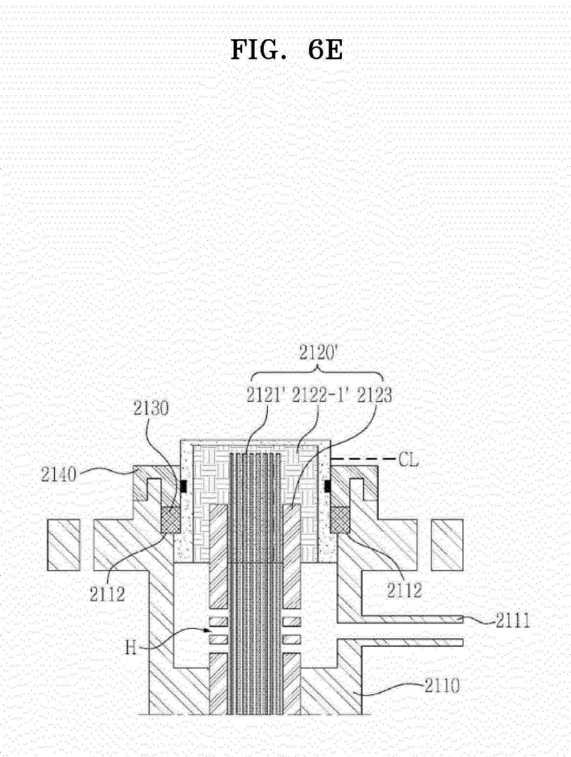

Subsequently, as shown in FIG. 6E, a second fixing layer 2122-2' filling the gap between the end of the hollow fiber membrane cartridge 2120' and the mid-case 2110, bracket 2130, and packing member 2140 is formed.

The second fixing layer 2122-2' is formed by fastening a potting cap (not shown) to the mid-case 2110, performing a deep casting process of injecting and curing a liquid resin such as liquid polyurethane resin into the potting cap while the potting cap is located below the mid-case 2110, and then removing the potting cap. Alternatively, the second fixing layer 2122-2' may be formed through a centrifugal casting process.

The first and second fixing layers 2122-1' and 2122-2' may each be formed of different liquid resins, but it may be preferable that the first and second fixing layers 2122-1' and 2122-2' may each be formed of the same material (e.g., liquid polyurethane resin) in terms of adhesive strength therebetween.

According to an embodiment of the present disclosure, by hardening the liquid resin (e.g., liquid polyurethane) used to form the second fixing layer 2122-2' while in contact with the bracket 2130, the packing member 2140, and the protruding member 2150, the adhesion of the second fixing layer 2122-2' thereto may be improved and internal sealing may be strengthened.

According to an embodiment of the present disclosure, since the bracket 2130 includes a material with excellent adhesion to the second fixing layer 2122-2', the movement of gas through the interface therebetween (i.e., internal leakage) may be prevented, thereby providing stronger internal sealing. In addition, when using the bracket 2130 whose surface has been treated with a primer as described above, the adhesive strength between the bracket 2130 and the second fixing layer 2122-2' may be maximized, thereby providing better internal sealing.

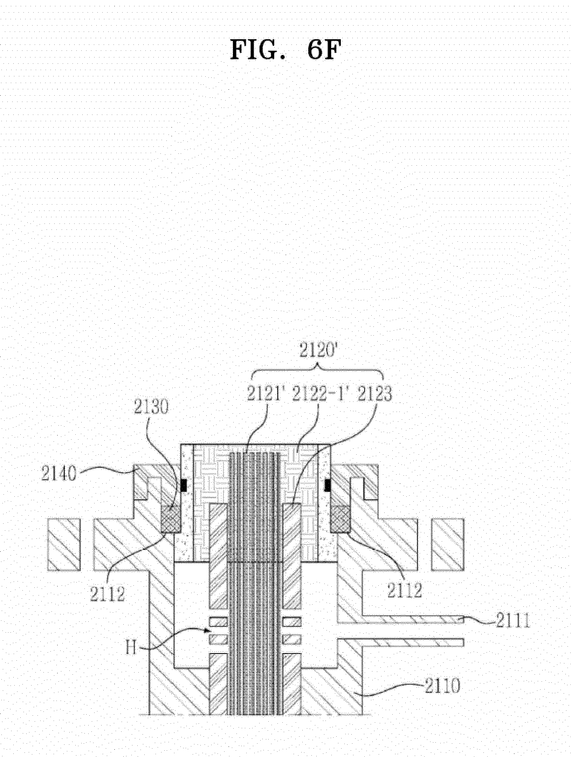

Subsequently, by simultaneously cutting the first fixing layer 2122-1', the second fixing layer 2122-2', and the hollow fiber membranes 2121' along a cutting line CL of FIG. 6E, as shown in FIG. 6F, the hollow fiber membranes 2121 with open ends are obtained, the open ends potted in the first fixing layer 2122-1 surrounded by the second fixing layer 2122-2.

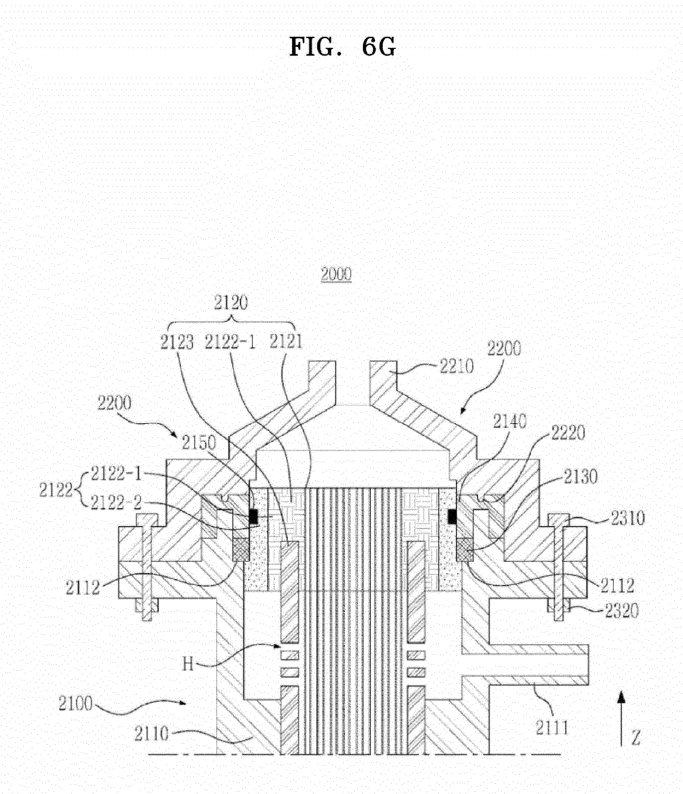

Subsequently, as shown in FIG. 6G, the cap 2200 is fastened to the mid-case 2110, so that the packing member 2140 is compressed by the cap 2200.

As shown in FIG. 6G, the cap 2200 according to an embodiment of the present disclosure may have a cap protrusion 2220 at a position corresponding to the end of the mid-case 2110 fitted into the groove of the packing member 2140. The cap protrusion 2220 enables tighter external sealing by more effectively compressing the packing member 2140 together with the end of the mid-case 2110.

In addition, according to an embodiment of the present disclosure, the bracket 2130 has a higher hardness than the packing member 2140, so that the packing member 2140 may be compressed when the cap 2200 is fastened to the mid-case 2110.

That is, since the bracket 2130 is not only supported by the step 2112 of the mid-case 2110, but also has a higher hardness (60 to 100 Shore A, more preferably 70 to 100 Shore A) than the hardness (30 to 60 Shore A, more preferably 40 to 50 Shore A) of the packing member 2140, the bracket 2130 may effectively apply pressure to the packing member 2140 together with the cap 2200 when the cap 2200 is fastened to the mid-case 2110 with the bolt 2310 and the nut 2320. As a result, a portion of the packing member 2140 disposed between the cap 2200 and the bracket 2130 (i.e., inside the mid-case 2110) is sufficiently compressed so that excellent internal sealing may be ensured by preventing movement of gas (i.e., internal leakage) through the interface between the packing member 2140 and the bracket 2130.

According to the present disclosure described above, both external and internal leakages may be effectively prevented through mechanical assembly of the bracket 2130 and the packing member 2140, without the sealant application and curing processes of the prior art. Therefore, according to the present disclosure, not only is workability improved because the sealant application process and sealant curing process required in the prior art are omitted, but the manufacturing time is shortened, thereby dramatically improving productivity. Additionally, humidifier production costs may be reduced because no separate space is required to store semi-finished products during the sealant curing process. In addition, the protruding member 2150 is formed on the inner wall of the packing member 2140 to suppress vibrations generated during operation, and to suppress the air inside the mid-case 2110 from flowing into the cap 2200, thereby strengthening the sealing function and facilitating the selection of the position of the fixing layer 2122 when forming the fixing layer 2122.

While one or more embodiments have been described with reference to the figures, it will be understood by those of ordinary skill in the art that various changes in form and details may be made therein without departing from the spirit and scope of the disclosure as defined by the following claims.

### Reference Numerals

| | | | |
|---|---|---|---|
| 2000: | FUEL CELL MEMBRANE HUMIDIFIER | | |
| 2100: | HUMIDIFICATION MODULE | 2110: | MID-CASE |
| 2120: | HOLLOW FIBER MEMBRANE CARTRIDGE | | |
| 2121: | HOLLOW FIBER MEMBRANE | | |
| 2122: | FIXING LAYER | | |
| 2130: | BRACKET | | |
| 2140: | PACKING MEMBER | | |
| 2150: | PROTRUDING MEMBER | | |

## Claims

1. A fuel cell membrane humidifier comprising: a humidification module configured to humidify air supplied from outside with moisture in off-gas discharged from a fuel cell stack; and
caps coupled to both ends of the humidification module, respectively,
wherein the humidification module comprises:
a mid-case with both ends open and a step formed on an inner circumferential surface of the mid-case;
at least one cartridge positioned within the mid-case and accommodating a plurality of hollow fiber membranes;
a fixing layer in which ends of the hollow fiber membranes are potted, the fixing layer being supported by an inner wall of the mid-case;
a bracket supported by the step of the mid-case and in contact with the fixing layer; and
a packing member having a groove into which an end of the mid-case is fitted, the packing member being in contact with the bracket.

2. The fuel cell membrane humidifier of claim 1,
wherein the bracket and the packing member each have a single closed curve shape corresponding to a transverse section of the mid-case.

3. The fuel cell membrane humidifier of claim 1,
wherein the bracket has a higher hardness than the packing member.

4. The fuel cell membrane humidifier of claim 3,
wherein the bracket has a hardness of 60 to 100 Shore A, and the packing member has a hardness of 40 to 50 Shore A.

5. The fuel cell membrane humidifier of claim 1,
wherein the packing member comprises soft rubber, and
the bracket comprises metal, hard plastic, or hard rubber.

6. The fuel cell membrane humidifier of claim 5,
wherein the packing member comprises silicone rubber or urethane rubber, and
the bracket comprises polypropylene (PP), polyethylene terephthalate (PET), polystyrene (PS), polycarbonate (PC), or acrylic resin.

7. The fuel cell membrane humidifier of claim 1,
wherein the packing member is in contact with the fixing member.

8. The fuel cell membrane humidifier of claim 1,
wherein the fixing member comprises a first fixing layer in which ends of the hollow fiber membranes are potted; and
a second fixing layer surrounding the first fixing layer and contacting the bracket.

9. The fuel cell membrane humidifier of claim 8,
wherein the first fixing layer and the second fixing layer are formed of a same material.

10. The fuel cell membrane humidifier of claim 8,
wherein both the first fixing layer and the second fixing layer comprise polyurethane (PU) resin.

11. The fuel cell membrane humidifier of claim 8,
wherein the humidification module further comprises an inner case with both ends open within the mid-case, and
the hollow fiber membranes are positioned within the inner case.

12. The fuel cell membrane humidifier of claim 11,
wherein the end of the inner case is potted in the first fixing layer.

13. The fuel cell membrane humidifier of claim 1,
wherein a protruding member is formed on the inner wall of the packing member, the protruding member fitted into the fixing layer and suppressing vibrations generated in the cartridge by air flowing inside the humidification module.

14. A fuel cell membrane humidifier comprising: a humidification module configured to humidify air supplied from outside with moisture in off-gas discharged from a fuel cell stack; and
caps coupled to both ends of the humidification module, respectively,
wherein the humidification module comprises:
a mid-case with both ends open and a step formed on an inner circumferential surface of the mid-case;
at least one cartridge positioned within the mid-case and accommodating a plurality of hollow fiber membranes;
a fixing layer in which ends of the hollow fiber membranes are potted, the fixing layer being supported by an inner wall of the mid-case;
a bracket supported by the step of the mid-case and in contact with the fixing layer; and
a packing member having a groove into which an end of the mid-case is fitted, the packing member being in contact with the bracket,
wherein the hollow fiber membranes comprise a first group of hollow fiber membranes and a second group of hollow fiber membranes,
wherein the humidification module comprises
a first inner case in which the first group of hollow fiber membranes are arranged, and
a second inner case in which the second group of hollow fiber membranes are arranged, and
wherein the fixing layer comprises
a first fixing layer in which ends of the first group of hollow fiber membranes are potted,
a second fixing layer in which ends of the second group of hollow fiber membranes are potted, and
a third fixing layer surrounding the first and second fixing layers and contacting the bracket.

15. The fuel cell membrane humidifier of claim 14,
wherein a protruding member is formed on the inner wall of the packing member, the protruding member fitted into the fixing layer and suppressing vibrations generated in the cartridge by air flowing inside the humidification module.

16. The fuel cell membrane humidifier of claim 14,
wherein an end of the first inner case is potted in the first fixing layer, and
an end of the second inner case is potted in the second fixing layer.
